# EUROPÄISCHE PATENTSCHRIFT

(11) **EP 2 428 307 B1**
(45) Veröffentlichungstag und Bekanntmachung des Hinweises auf die Patenterteilung: **16.03.2016**
(21) Anmeldenummer: 10176255.7
(22) Anmeldetag: 10.09.2010
(51) Int. Cl.: B23K 26/00, G05B 19/18

(54) **Verfahren zur Erzeugung von rauen Oberflächenstrukturen**
Method for generating rough surface structures
Procédé de production de structures de surface rugueuses

(43) Veröffentlichungstag der Anmeldung: 14.03.2012
(73) Patentinhaber: ACSYS Lasertechnik GmbH, 09648 Mittweida (DE)
(72) Erfinder: Heinritz, Silvio, 09514, Lengefeld (DE); Heinritz, Uwe, 09514, Lengefeld (DE); Polster, Marcus, 71642, Ludwigsburg (DE); Hartmann, Claudia, 70806, Kornwestheim (DE); Jedynak, Mirko, 09648, Mittweida (DE)
(74) Vertreter: Sperling, Thomas

(56) Entgegenhaltungen:
- EP-A1- 0 536 625

## Beschreibung

Die Erfindung betrifft ein Verfahren zur Erzeugung von rauen Oberflächenstrukturen. Unter rauen Oberflächenstrukturen sollen Strukturen verstanden werden, die vom menschlichen Auge als Oberflächen mit gleichmäßig verteilter Rauheit erfasst werden. Bei bekannten Verfahren zur Erzeugung solcher Oberflächenstrukturen kommt es darauf an, eine Rauheit ohne eine erkennbare Rasterung oder Abstufung zu erzeugen. Sofern die Oberflächen eine dreidimensionale Struktur aufweisen, soll bei der Erzeugung rauer Bereiche der Oberfläche ein Detailverlust der Originaloberfläche hinsichtlich der dreidimensionalen Struktur vermieden werden.

Die verfahrensgemäß gewünschten Oberflächenstrukturen kommen beispielsweise bei der Oberflächenveredlung und Oberflächenmodifikation im Werkzeug- und im Formenbau zur Anwendung. Insbesondere sind dabei die Anfertigung von Spritzgusswerkzeugen und Prägewerkzeugen sowie deren Reparatur und Überarbeitung, dem so genannten Refreshing, als Anwendungsgebiete zu nennen. In der Münzindustrie sind diese Verfahren zur Herstellung und zur Überarbeitung und dem Refreshing von Münzprägestempeln, auch als Frosting bezeichnet, einsetzbar. Weitere Anwendungsgebiete sind die Herstellung, die Reparatur, Überarbeitung und das Refreshing von Mikroformen und Mikrostempeln.

Den genannten Einsatzgebieten ist gemeinsam, dass jeweils die dreidimensionale Originalstruktur erhalten bleibt und dass mindestens Teile der Originalstruktur mit einer rauen Oberflächenstruktur versehen werden sollen.

Unter der Originalstruktur soll die dreidimensionale Gestaltung einer Oberfläche, beispielsweise eines Münzprägestempels, verstanden werden, wobei einige Bereiche der dreidimensionalen Oberflächenstruktur aus optischen oder anderen Gründen aufgeraut werden sollen. Oberflächenmodifikationen der beschriebenen Art werden im Stand der Technik durch Sandstrahlen, Elektroerodieren oder Ätzen erhalten.

Nachteilig beim Sandstrahlen und Ätzen ist, dass eine Maske erforderlich ist, die diejenigen Segmente der dreidimensionalen Oberflächenstruktur abdecken muss, die von der Modifikation verschont bleiben sollen. Dies erfolgt beispielsweise durch Abkleben der betreffenden nicht zu behandelnden Segmente der dreidimensionalen Oberflächenstruktur.

Beim Elektroerodieren besteht der gravierende Nachteil, dass immer eine Senkelektrode hergestellt werden muss, die die gesamte zu bearbeitende Oberfläche, welche oftmals dreidimensional vorliegt, abbilden muss. Dieses vom Ergebnis qualitativ hochwertige Verfahren erfordert einen erheblichen Aufwand und kann deshalb nur in besonderen Konstellationen wirtschaftlich sinnvoll eingesetzt werden.

Weiterhin ist im Stand der Technik zur Modifizierung von Oberflächen der Einsatz von Lasertechnik bekannt. Dabei werden mit dem Laser die gewünschten Konturen mit Linienschraffuren unterschiedlichster Fülldichten und Füllwinkel mit Lasern unterschiedlichster Pulsbreiten, -formen, -zeiten, -spitzenleistungen und unterschiedlichster Ausgangsleistungen gefüllt.

Beim Herstellen derartiger rauer Oberflächenstrukturen mittels Lasern bildet sich jedoch immer eine gewisse optisch wahrnehmbare Regelmäßigkeit heraus, welche durch das linienförmige Bearbeiten der Segmente mit dem Laserstrahl bedingt ist. Selbst bei der Verwendung von mehrfachen Füllungen mit sich kreuzenden oder anderweitig überlagernden Linien ist diese Regelmäßigkeit nie komplett vermeidbar und es können zudem Strukturen und Feinheiten der Originaloberfläche verloren gehen.

Aus der DE 601 02 007 T2 ist ein Verfahren zur Bearbeitung von Formmatrizen für Münzen oder Medaillen mit einer gehärteten Oberfläche bekannt, in der ein Motiv gebildet ist, dass lediglich aus mehr oder weniger verdichtet angeordneten Reihen von Vertiefungen gebildet wird. Jede Vertiefung weist dabei im Wesentlichen den gleichen Durchmesser auf, der zwischen 0,1 und 3 µm (Mikrometer) liegt, wobei jede Vertiefung wiederum im Wesentlichen die gleiche Tiefe hat.

Es ist davon auszugehen, dass durch die regelmäßige Anwendung des Lasers zur Erzeugung der Vertiefungen auch unerwünschte regelmäßige Strukturen erhalten bleiben und auch nach der Behandlung sichtbar sind.

In der EP 0 536 625 A1 wird ein Verfahren zur Erzeugung von rauen Oberflächenstrukturen mittels Laserbehandlung offenbart, bei dem der Laser entlang einer abzufahrenden Spurlinie geführt wird. Die Spurlinie ist dabei als eine durchgängige Linie ausgebildet. Diese durchgängige Spurlinie wird erzeugt, indem zunächst eine Bahnkurve ermittelt wird. Auf dieser Bahnkurve werden Sollpunkte in bestimmten Abschnitten ermittelt. Um diese Sollpunkte herum werden dann kreisförmige Flächenbereiche angelegt, innerhalb derer mittels eines Zufallsgenerators Spurpunkte definiert werden. Eine Verbindungslinie der Spurpunkte ergibt die für den Laser abzufahrende Spurlinie.

Wiederum ist als nachteilig zu verzeichnen, dass Linienstrukturen bestehen, welche innerhalb der Rauheit optisch erkennbar bleiben könnten. Weiterhin ist nachteilig, dass die Ermittlung der Spurlinie aufwändig über die Zwischenschritte der Ermittlung der Sollpunkte und der Flächenbereiche sowie der Spurpunkte erfolgt.

Es besteht somit die Aufgabe, ein Verfahren zur Erzeugung von rauen Oberflächenstrukturen bereitzustellen, welches die genannten Nachteile vermeidet und insbesondere raue Oberflächenstrukturen erzeugt, welche keine regelmäßigen Strukturen innerhalb der Rauheit optisch erkennen lassen oder erzeugen.

Erfindungsgemäß wird die Aufgabe durch ein Verfahren zur Erzeugung von rauen Oberflächenstrukturen mittels Laserbehandlung gelöst, bei dem ein Laserstrahl entlang von Fülllinien über den zu bearbeitenden Bereich geführt wird. Entscheidend ist nun, dass die Fülllinie in einzelne Laserpunkte mit einem vorgebbaren Abstand a zerlegt wird und dass diese Laserpunkte eine Punktwolke bildend mit einem Zufallsfaktor gegenüber der Fülllinie in der Ebene in X- und Y-Richtung verschoben werden.

Durch das erfindungsgemäße Verfahren können Oberflächen veredelt und modifiziert werden, in denen Fräs-, Schleif- oder ähnliche Spuren existieren, die nach dieser Bearbeitung nicht mehr erkennbar sind. Durch das Verfahren können definierte Bereiche angeraut werden und geschliffene und polierte oder ähnliche Oberflächen damit modifiziert werden. Unter einer definierten Behandlung soll dabei verstanden werden, dass die modifizierte Oberfläche mit einer genau festgelegten Rauheit beaufschlagt werden kann.

Konzeptionsgemäß verhindert der Zufälligkeitscharakter der Verteilung der einzelnen Laserpunkte auf der Fülllinie und um die Fülllinie herum, dass regelmäßige Ausrichtungen, die im Stand der Technik zum Beispiel als Linien, Kreise, Mäander, Rechtecke, Quadrate oder ähnlich geartete geometrische Objekte erkennbar sind, optisch nicht mehr wahrgenommen werden können. Erfindungsgemäß verschwimmen in der Vielzahl der Laserpunkte der Punktwolke die unerwünschten regelmäßigen Strukturen und sind für das menschliche Auge nicht mehr sichtbar.

Bei der Laserbearbeitung werden die üblichen Fülllinien zunächst durch einen geeigneten Software-Algorithmus in einzelne Punkte mit dem Abstand a zerlegt.
Der Abstand a liegt dabei typischerweise im Bereich von 10 µm bis 40 µm.

Dies erfolgt erfindungsgemäß dadurch, dass der Punktabstand a für die Fülllinien einheitlich als Parameter, beispielsweise in Millimetern, vorgegeben wird und jede Linie durch diesen Wert geteilt wird. Man erhält eine bestimmte Anzahl von Punkten mit einem definierten Abstand und einer Richtung der Abarbeitung für den Laser.

Diese Laserpunkte werden ebenfalls per Software-Algorithmus in ihrer Position mit einem einstellbaren Zufallsfaktor b beaufschlagt und auf diese Weise zufällig in der Ebene, also in X- und Y-Richtung, verschoben. Im Ergebnis entsteht eine Punktwolke, die als raue Struktur erscheint.
Der Zufallsfaktor b wird dabei in Prozent angegeben, wobei 100 % dem vorher gewählten Punktabstand a entsprechen.

Eine vorteilhafte Ausgestaltung der Erfindung besteht darin, dass der Abstand a der Punkte einer Fülllinie zu dem Abstand a der Punkte der benachbarten Fülllinie zusätzlich differiert, wenn also unterschiedliche Abstände a für verschiedene Fülllinien zur Anwendung kommen. Die Wahl der Abstände a erfolgt vorgebbar oder zufällig verteilt.

Nach einer weiteren Ausgestaltung der Erfindung sind die Abstände c der Fülllinien zueinander ebenfalls vorgebbar oder zufällig variabel gestaltet.

Besonders vorteilhaft an diesem Verfahren ist, dass die Füllung vom Benutzer als Funktion über den Abstand der Laserpunkte a gewählt werden kann und der Grad der Zufälligkeit der Verschiebung der Punkte gegenüber der Fülllinie in der Ebene über die Parameter der verwendeten Zufallsfunktion b einstellbar ist, um die gewünschte Oberflächenstruktur in ihrer Rauheit an die Erfordernisse anzupassen.

Der Parameter Punktabstand a bestimmt den Abstand der Punkte untereinander, wohingegen der Parameter Zufallsfaktor b, beispielsweise in %, den Unschärfebereich angibt, in dem die Position des Punktes variieren kann, wobei 100 % der Abstand zum nächsten Punkt ist.

Die übrigen dem Stand der Technik entsprechenden Parameter der Laserbehandlung von Oberflächen, wie Leistung, Pulsfrequenz und -länge, sowie Scangeschwindigkeit, haben einen verstärkenden oder abschwächenden zusätzlichen Einfluss auf das Bearbeitungsergebnis.

Nach einer vorteilhaften Weiterbildung der Erfindung werden die einzelnen Laserpunkte zusätzlich mit einer zufälligen Länge belegt. Unter einem Laserpunkt oder Punkt wird im Sinne der Erfindung eine Mikrokavität, im Folgenden auch Kavität genannt, verstanden. Unter der Länge des Laserpunktes ist bei dreidimensionaler Betrachtung somit die Tiefe der durch den Laser entstehenden strahlen- oder linienförmigen Kavität zu verstehen. Damit wird erreicht, dass einem einzelnen Laserpunkt auch von der Tiefe der entstehenden Kavität und seiner punktförmigen Erscheinung her der Charakter der Regelmäßigkeit genommen wird. Es entstehen dabei sehr kurze Vektoren.

Als weiteren Parameter zur Verbesserung des Erscheinungsbildes der rauen Oberfläche wird vorteilhaft die Richtung der linienförmigen Kavität eingesetzt. Zu unterscheiden ist die Lage der linienförmigen Kavität in der Ebene, der X-Y-Ebene, von der Lage der linienförmigen Kavität im Raum, gekennzeichnet durch die X-Y-Z-Koordinaten.

Der Winkel α alpha der Abweichung der Richtung der strahlen- oder linienförmigen Kavität von der Richtung der Fülllinie in der Ebene liegt dabei in einem Bereich von 0° bis 360°.

Der Winkel β beta der Abweichung der Richtung der strahlen- oder linienförmigen Kavität von der Oberflächennormalen, der Z-Richtung, liegt dabei bevorzugt in einem Bereich von 45° bis 90°.

Bei einer schräg zur Oberflächennormalen eingebrachten Kavität erscheinen die Laserpunkte in der Draufsicht auf die Oberfläche als ovale, ellipsoidale Flächen.

Der Parameter Linienlänge I in Mikrometern beispielsweise gibt an, bis zu welcher Länge die kurzen Vektoren gebildet werden können. Typischerweise liegt dieser Parameter I im Bereich von 0,5 µm bis 10 µm.

Die Kombination von zufälliger Linienlänge I, zufälliger Richtung durch die Winkel α alpha und/oder β beta und zufälliger Punktverschiebung führt zu einem Bearbeitungsergebnis, bei welchem mit drei Parametern ein Zufälligkeitscharakter der Rauheit der Oberfläche erreicht wird, der mit herkömmlichen Methoden nicht erreichbar ist.

Für die Berechnung der Zufallsverteilung wird ein Standard-Zufallsgenerator verwendet, wobei das Verfahren und die gewünschte optische Erscheinung der rauen Oberfläche durch den Grad der Zufallsfaktoren genau definier- und vorgebbar ist.

Als besonderen Vorteil der Erfindung gegenüber den Verfahren nach dem Stand der Technik ist zu benennen, dass partielle Oberflächenmodifikationen ohne Masken und ohne Elektroden und somit ohne Zwischenschritte direkt auf dem Werkstück erzeugt werden können.

Auch das Ergebnis, die Rauheit der Oberfläche, ist definiert durch den Grad der Verteilung, der Dichte, der Lage und der Länge beziehungsweise Tiefe der Laserpunkte kontrollier- und bestimmbar. Das Verfahren ist weiterhin vollständig automatisierbar, wodurch der Mensch als Fehlerquelle im Produktionsprozess ausgeschlossen werden kann.

Ein weiterer Vorteil besteht darin, dass auf der Oberfläche ein zusätzlicher Härtungseffekt erzeugt wird, welcher insbesondere bei der Modifikation von Münzprägestempeln zu einer Verlängerung der Standzeit der Werkzeuge führt.

Im Werkzeugbau ist das Verfahren für das Aufrauen zum Entspiegeln von Oberflächen, beispielsweise von Luftauslassdüsen in Kraftfahrzeugen, vorteilhaft einsetzbar.

Gegenüber dem Elektroerodieren und Ätzen entfällt bei der Verwendung der Lasertechnologie der Anfall von entsorgungspflichtigen Substanzen, worin ein ökologischer und ökonomischer Vorteil gegenüber diesen Verfahren besteht.

Weiterhin wird durch das Einsparen von Masken und Elektroden gegenüber dem Sandstrahlen und Elektroerodieren die Herstellungs- und Bearbeitungszeit der Oberflächen verkürzt sowie eine Materialersparnis erreicht.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: Füllung einer beliebigen Kontur mit Fülllinien,
- Fig. 2:: Zerlegung der Linien in Punkte mit wählbarem Abstand a,
- Fig. 3:: zufällige Verschiebung der Punkte mit Zufallsfaktor b,
- Fig. 4:: Vergrößerung der Punkte mit Parameter Linienlänge I und
- Fig. 5a,b,c,d:: Prinzipdarstellung der Verteilung der Punkte in der Ebene und der Ausbildung der Kavitäten in der Tiefe.

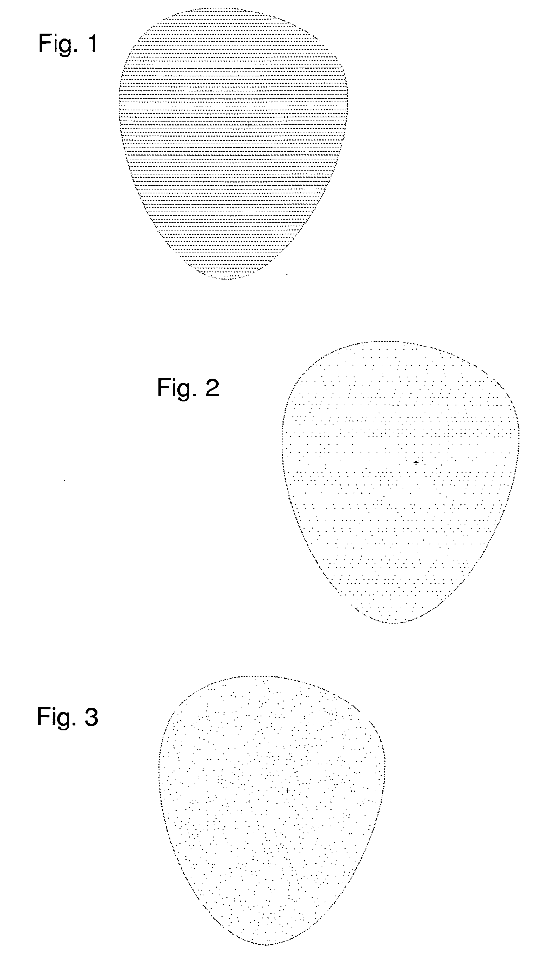

In Figur 1 ist die Füllung einer beliebigen Kontur mit Fülllinien nach dem Stand der Technik dargestellt. Ausgehend von diesem Grundmuster wird diese in ihrer Gleichmäßigkeit unerwünschte Linienstruktur durch die Zerlegung der Linien in Punkte mit wählbarem Abstand a gemäß Figur 2 bereits aufgelockert. Wie ersichtlich, ist allein durch diesen Bearbeitungsschritt jedoch die Linienstruktur und Rasterstruktur immer noch optisch wahrnehmbar und das Bearbeitungsergebnis somit noch nicht optimal. Es schließt sich der in Figur 3 dargestellte Schritt der zufälligen Verschiebung der Punkte in der Ebene in X-und Y-Richtung mit dem Zufallsfaktor b an. Hierdurch wird die Linienstruktur aufgebrochen und die Rauheit der Oberfläche optisch erreicht.

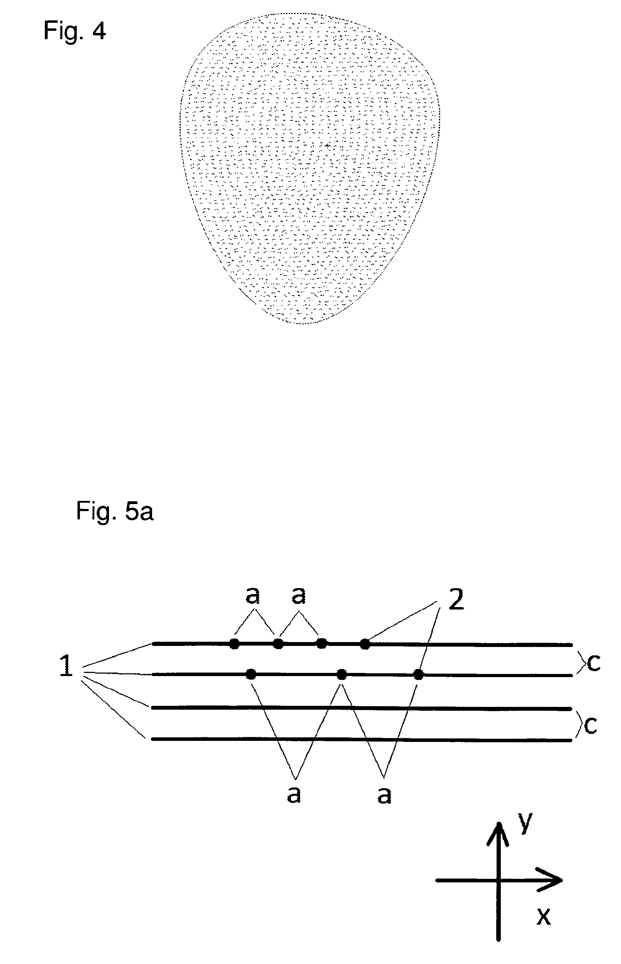

In Figur 4 ist die zusätzliche Modifikation der einzelnen Laserpunkte mit dem Parameter Linienlänge I dargestellt, wodurch eine weitere Verungleichmäßigung und damit verbunden die optische Verbesserung der Rauheit erfolgt.

Neben der durch die Linienlänge I erzeugten von der Richtung der Fülllinien abweichenden Richtung der Laserpunkte in der Ebene des X-Y-Koordinatensystems ist noch ein zusätzlicher Parameter durch die Tiefe und Richtung der linearen Kavität vorteilhaft zur Erzeugung der Oberflächenrauheit einsetzbar.

In Figur 5a ist das Prinzip der Verteilung der Laserpunkte in der Ebene, im X-Y-Koordinatensystem, stark abstrahiert und vergrößert dargestellt. Die Fülllinien 1 sind parallel zueinander im Abstand c im zu bearbeitenden Bereich angeordnet. Die Laserpunkte 2 einer Fülllinie 1 weisen den Abstand a auf. Dieser Abstand a zwischen den Laserpunkten 2 auf einer Fülllinie 1 ist im dargestellten Ausgestaltungsbeispiel für jede Fülllinie 1 separat gewählt. Je nach Parametrierung des Verfahrens kann der Abstand a jedoch auch für alle Fülllinien 1 eines zu bearbeitenden Bereiches gleich gewählt werden.

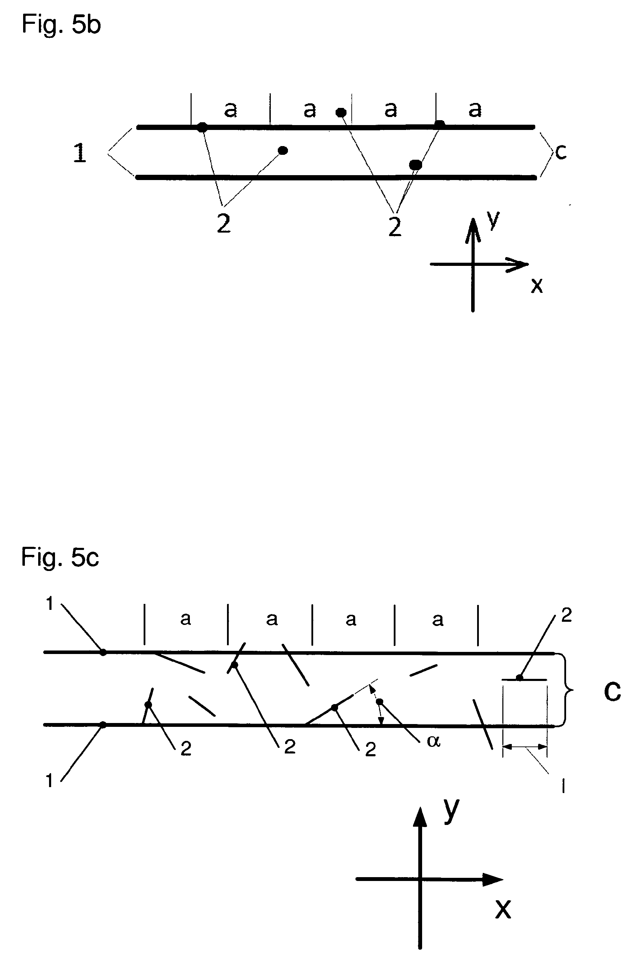

In Figur 5b ist der nachfolgende Schritt der zufälligen Verschiebung der Laserpunkte 2 sowohl auf der Fülllinie 1 in X-Richtung als auch die zufällige Verschiebung der Laserpunkte 2 in Y-Richtung stark vergrößert prinziphaft dargestellt.

In Figur 5c sind die Fülllinien 1 mit ihrem Abstand c zueinander und in der X-Y-Ebene gebildete Laserpunkte 2 in Form von in der Ebene liegenden linienförmigen oder grabenartigen Furchen, auch als Kavitäten 3 bezeichnet, dargestellt. Die Laserpunkte 2 besitzen als Linienstücke eine Länge I und eine Richtung, die in Bezug auf die Lage der Fülllinien als Winkel α alpha charakterisiert ist. Mit dieser Ausgestaltung, der zufälligen Verteilung der Punkte 2 in X- und Y-Richtung und der Länge I der Linien sowie deren zufällige Richtung α in der Ebene, entsteht ein Bild, wie in Figur 4 stark vergrößert dargestellt ist. Die Länge I wird im Ausführungsbeispiel mit 0,5 µm bis 10 µm realisiert.

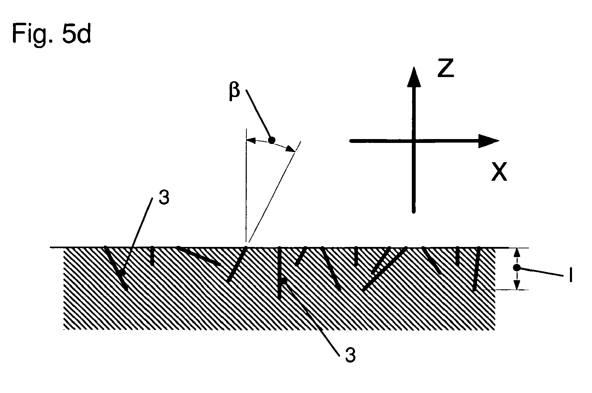

Figur 5d zeigt schließlich im Schnitt eine bearbeitete Oberfläche. Die Oberflächennormale ist als Z-Richtung angedeutet. Der Laser erzeugt auf der Oberfläche Kavitäten 3 mit einer Länge I. Eine zusätzliche Gestaltung der Oberflächenstruktur ergibt sich aus der Richtung der Bearbeitung des Laserstrahls und der sich daraus ergebenden Lage der Kavität 3. Die Lage der Kavität 3 im Raum wird bestimmt durch den Winkel β beta, in welchem die Kavität 3 zur Oberflächennormale, der Z-Richtung, ausgerichtet ist. Besonders vorteilhafte Ergebnisse werden erreicht, wenn der Winkel α alpha für benachbarte Laserpunkte zufällig ausgewählt wird. Die Länge I wird auch in diesem Ausführungsbeispiel mit 0,5 µm bis 10 µm realisiert.

### BEZUGSZEICHENLISTE

- 1: Fülllinie
- 2: Laserpunkt, Punkt
- 3: Kavität

- a: Abstand der Laserpunkte einer Fülllinie zueinander
- b: Zufallsfaktor
- c: Abstand der Fülllinien zueinander
- l: Länge der Kavitäten
- α alpha: Winkel zur Richtung der Fülllinie
- β beta: Winkel zur Richtung der Oberflächennormale

## Patentansprüche

1. Verfahren zur Erzeugung von rauen Oberflächenstrukturen mittels Laserbehandlung, bei dem
- ein Laserstrahl entlang von Fülllinien (1) über den zu bearbeitenden Bereich geführt wird, wobei
- die Fülllinie (1) in einzelne Laserpunkte (2) mit einem Abstand a zerlegt wird und
- die Laserpunkte (2) mit einem Zufallsfaktor b gegenüber der Fülllinie (1) eine Punktwolke bildend in der Ebene in X- und Y-Richtung verschoben werden.

2. Verfahren nach Anspruch 1, **dadurch gekennzeichnet, dass** der Abstand a der Laserpunkte (2) zueinander im Bereich von 10 µm bis 40 µm liegt.

3. Verfahren nach Anspruch 1 oder 2, **dadurch gekennzeichnet, dass** der Abstand a benachbarter Fülllinien (1) unterschiedlich gewählt ist.

4. Verfahren nach einem der Ansprüche 1 bis 3, **dadurch gekennzeichnet, dass** die Laserpunkte (2) linienförmig mit einer zufälligen Länge I in der Ebene, in X-Y-Richtung, ausgeführt werden.

5. Verfahren nach einem der Ansprüche 1 bis 4, **dadurch gekennzeichnet, dass** die Laserpunkte (2) mit einer zufälligen Länge I linienförmig in die Tiefe, in X-Y-Z-Richtung, ausgeführt werden.

6. Verfahren nach Anspruch 4 oder 5, **dadurch gekennzeichnet, dass** die Länge I der Laserpunkte (2) im Bereich zwischen 0,5 µm und 10 µm liegt.

7. Verfahren nach einem der Ansprüche 4 bis 6, **dadurch gekennzeichnet, dass** der Laser bei der Erzeugung der Laserpunkte (2) mit einer zufälligen Richtung belegt wird und die erzeugten Kavitäten (3) in einem Winkel α alpha zur Richtung der Fülllinien (1) ausgeführt sind.

8. Verfahren nach einem der Ansprüche 4 bis 7, **dadurch gekennzeichnet, dass** der Winkel α alpha im Bereich von 0° bis 360° liegt.

9. Verfahren nach einem der Ansprüche 5 bis 8, **dadurch gekennzeichnet, dass** der Laser bei der Erzeugung der Laserpunkte (2) mit einer zufälligen Richtung belegt wird und die erzeugten Kavitäten (3) in einem Winkel β beta zur Richtung der Oberflächennormalen, der Z-Richtung, ausgeführt sind.

10. Verfahren nach einem der Ansprüche 5 bis 9, **dadurch gekennzeichnet, dass** der Winkel β beta im Bereich von 45° bis 90° liegt.

11. Verfahren nach einem der Ansprüche 1 bis 10, **dadurch gekennzeichnet, dass** der Grad der Zufälligkeit b vorgebbar ist.

## Claims

1. Method for producing rough surface structures by means of laser treatment, wherein
- a laser beam is guided along filling lines (1) over the area to be processed,
wherein
- the filling line (1) is broken down into individual laser dots (2) with a distance a, and
- the laser dots (2) are moved in an X-direction and in a Y-direction in a plane by a random factor b relative to the filling line (1) so that they form a cloud of dots.

2. Method according to claim 1,
**characterized in that**
the distance a of the laser dots (2) from one another is in a range of 10 µm to 40 µm.

3. Method according to claim 1 or 2,
**characterized in that**
the distance a between adjacent filling lines (1) is selected so as to vary.

4. Method according to any of claims 1 to 3,
**characterized in that**
the laser dots (2) are configured with a linear shape with a random length *l* in the plane in an XY-direction.

5. Method according to any of claims 1 to 4,
**characterized in that**
the laser dots (2) are configured with a linear shape with a random length *l* into the depth in an XYZ-direction.

6. Method according to claim 4 or 5,
**characterized in that**
the length *l* of the laser dots (2) lies in a range between 0,5 µm and 10 µm.

7. Method according to any of claims 4 to 6,
**characterized in that**
the laser is allocated a random direction during generation of the laser dots (2) and the created cavities (3) are realized at an angle *α* alpha relative to the direction of the filling lines (1).

8. Method according to any of claims 4 to 7,
**characterized in that**
the angle α alpha lies in a range of 0° to 360°.

9. Method according to any of claims 5 to 8,
**characterized in that**
the laser is allocated a random direction during generation of the laser dots (2) and the created cavities (3) are realized at an angle *β* beta relative to the direction of the surface normal, i. e. in the Z-direction.

10. Method according to any of claims 5 to 9,
**characterized in that**
the angle *β* beta lies in a range of 45° to 90°.

11. Method according to any of claims 1 to 10,
**characterized in that**
the random factor b is predeterminable.

## Revendications

1. Procédé pour la production de structures de surface rugueuses au moyen d'un traitement laser, dans lequel
- un faisceau laser est guidé le long de lignes de remplissage (1) sur une région à traiter, dans lequel
- la ligne de remplissage (1) est décomposée en points laser (2) individuels avec une distance a, et
- les points laser (2) sont déplacés dans une direction X et dans une direction Y dans un plan par un facteur aléatoire b relative à la ligne de remplissage (1) de telle manière que ceux-ci forment un nuage de points.

2. Procédé selon la revendication1,
**caractérisé en ce que**
la distance a des points laser (2) l'un par rapport à l'autre se trouve dans une plage de 10 µm à 40 µm.

3. Procédé selon la revendication 1 ou 2,
**caractérisé en ce que**
la distance a entre des lignes de remplissage (1) adjacentes est choisie de telle manière que celle-ci soit variable.

4. Procédé selon l'une quelconque des revendications1 à 3, **caractérisé en ce que** les points laser (2) sont configurés avec une forme linéaire avec une longueur aléatoire *l* dans le plan en direction XY

5. Procédé selon l'une quelconque des revendications 1 à 4,
**caractérisé en ce que**
les points laser (2) sont configurés avec une forme linéaire avec une longueur aléatoire *l* dans la profondeur en direction XYZ.

6. Procédé selon la revendication 4 ou 5,
**caractérisé en ce que**
la longueur *l* des points laser (2) se trouve dans une plage de 0,5 µm et 10 µm.

7. Procédé selon l'une quelconque des revendications 4 à 6,
**caractérisé en ce que**
le laser est attribué une direction aléatoire lors de la génération des points laser (2) et les cavités (3) créées sont réalisées avec une angle *α* alpha relative à la direction des lignes de remplissage (1).

8. Procédé selon l'une quelconque des revendications 4 à 7,
**caractérisé en ce que**
l'angle *α* alpha se trouve dans une plage de 0° à 360°.

9. Procédé selon l'une quelconque des revendications 5 à 8,
**caractérisé en ce que**
le laser est attribué une direction aléatoire lors de la génération des points laser (2) et les cavités (3) créées sont réalisées avec un angle *β* bêta relative à la direction de la normale de surface, soit dans la direction Z.

10. Procédé selon l'une quelconque des revendications 5 à 9,
**caractérisé en ce que**
l'angle *β* bêta se trouve dans une plage de 45° à 90°.

11. Procédé selon l'une quelconque des revendications 1 à 10,
**caractérisé en ce que**
le facteur aléatoire b est prédéfinissable.
